# EUROPÄISCHE PATENTSCHRIFT

(11) **EP 3 701 138 B1**
(45) Veröffentlichungstag und Bekanntmachung des Hinweises auf die Patenterteilung: **16.02.2022**
(21) Anmeldenummer: 18782923.9
(22) Anmeldetag: 28.09.2018
(51) Int. Cl.: F02M 21/02

(54) **VERFAHREN ZUM BETREIBEN EINER BRENNKRAFTMASCHINE MIT ERDGAS, KRAFTSTOFFVERSORGUNGSSYSTEM FÜR EINE MIT ERDGAS BETREIBBARE BRENNKRAFTMASCHINE**
METHOD FOR OPERATING AN INTERNAL COMBUSTION ENGINE USING NATURAL GAS, AND FUEL SUPPLY SYSTEM FOR AN INTERNAL COMBUSTION ENGINE WHICH CAN BE OPERATED USING NATURAL GAS
PROCÉDÉ POUR FAIRE FONCTIONNER UN MOTEUR À COMBUSTION INTERNE AVEC DU GAZ NATUREL, SYSTÈME D'APPROVISIONNEMENT EN CARBURANT D'UN MOTEUR À COMBUSTION INTERNE FONCTIONNANT AU GAZ NATUREL

(30) Priorität: 25.10.2017 DE 102017219157
(43) Veröffentlichungstag der Anmeldung: 02.09.2020
(73) Patentinhaber: Robert Bosch GmbH, 70442 Stuttgart (DE)
(72) Erfinder: SCHNITTGER, Dirk, 71640 Ludwigsburg (DE); BEITER, Andreas, 72414 Rangendingen (DE); VIERECK, Markus, 70469 Stuttgart (DE)
(86) Internationale Anmeldenummer: PCT/EP2018/076463
(87) Internationale Veröffentlichungsnummer: WO 2019/081158

(56) Entgegenhaltungen:
- WO-A1-2009/136793
- WO-A1-2016/172803
- KR-B1- 101 309 631

## Beschreibung

Die Erfindung betrifft ein Verfahren zum Betreiben einer Brennkraftmaschine mit Erdgas mit den Merkmalen des Oberbegriffs des Anspruchs 1. Ferner betrifft die Erfindung ein Kraftstoffversorgungssystem für eine mit Erdgas betreibbare Brennkraftmaschine mit den Merkmalen des Oberbegriffs des Anspruchs 3.

Das Kraftstoffversorgungssystem ist zur Durchführung des vorgeschlagenen Verfahrens ausgebildet.

### Stand der Technik

Erdgas (englisch: "Natural Gas", abgekürzt: "NG") ist bei Normaltemperaturen selbst unter hohem Druck gasförmig (englisch: "Compressed Natural Gas", abgekürzt: "CNG"). Da flüssiges Erdgas (englisch: "Liquefied Natural Gas", abgekürzt: "LNG") ein deutlich geringeres Volumen als gasförmiges Erdgas besitzt, wird es für mobile Anwendung in der Regel in flüssiger Form vorgehalten. Hierzu wird das Erdgas auf Temperaturen von etwa -160°C heruntergekühlt. Der Betrieb einer Brennkraftmaschine mit Erdgas erfordert demnach ein speziell an diese Kraftstoffart angepasstes Kraftstoffversorgungssystem.

Aus der WO 2016/112462 A1 geht beispielhaft ein Kraftstoffversorgungssystem für eine mit Erdgas betreibbare Brennkraftmaschine hervor, das einen Kraftstofftank zur Bevorratung von flüssigem Erdgas sowie eine im Kraftstofftank aufgenommene Pumpenanordnung mit einer ersten und einer zweiten Pumpe umfasst. Die erste Pumpe dient als Vorförderpumpe und ist bodennah im Kraftstofftank angeordnet. Die zweite Pumpe dient als Hochdruckpumpe und ist oberhalb der ersten Pumpe im Kraftstofftank angeordnet, wobei der Einlass der Hochdruckpumpe mit dem Auslass der Vorförderpumpe verbunden ist.

Weitere Kraftstoffversorgungssysteme für eine mit Erdgas betreibbare Brennkraftmaschine gehen aus der WO 2009/136793 A1 und der KR 101309631 B1 hervor. Aus der WO 2016/172803 A1 ist zudem ein Verfahren zur intelligenten Druckregelung in einem Kryotank bekannt.

Der Erfindung liegt die Aufgabe zugrunde, den Betrieb einer mit Erdgas betriebenen Brennkraftmaschine dahingehend zu optimieren, dass nur so viel Erdgas auf Hochdruck gefördert wird, wie tatsächlich benötigt wird. Auf diese Weise soll der Wirkungsgrad verbessert werden.

Zur Lösung der Aufgabe werden das Verfahren mit den Merkmalen des Anspruchs 1 sowie das Kraftstoffversorgungssystem mit den Merkmalen des Anspruchs 3 angegeben. Vorteilhafte Weiterbildungen der Erfindung sind den jeweiligen Unteransprüchen zu entnehmen.

### Offenbarung der Erfindung

Bei dem vorgeschlagenen Verfahren zum Betreiben einer Brennkraftmaschine mit Erdgas, wird flüssiges Erdgas in einem Kraftstofftank bevorratet und mittels einer Vorförderpumpe über eine Saugleitung aus einem Flüssigphasenbereich des Kraftstofftanks angesaugt und einer Hochdruckpumpe zugeführt. Erfindungsgemäß wird zur Regelung des Vorförderdrucks auf der Druckseite der Vorförderpumpe dem angesaugten flüssigen Erdgas auf der Saugseite der Vorförderpumpe gasförmiges Erdgas aus einem Gasphasenbereich des Kraftstofftanks beigemischt.

Durch die Beimischung von gasförmigem Erdgas aus dem Gasphasenbereich des Kraftstofftanks kann der Vorförderdruck auf der Druckseite der Vorförderpumpe gesenkt werden. Zugleich sinkt die der Hochdruckpumpe zugeführte Menge an Erdgas, so dass auf diese Weise eine Anpassung der Fördermenge der Hochdruckpumpe an den tatsächlichen Bedarf der Brennkraftmaschine möglich ist.

Als besonders vorteilhaft erweiset sich, dass zur Regelung des Vorförderdrucks auf der Druckseite der Vorförderpumpe keine Menge abgesteuert werden muss, so dass Verluste minimiert werden und der Wirkungsgrad weiter steigt.

Ferner kann mit der Entnahme von gasförmigem Erdgas aus dem Gasphasenbereich des Kraftstofftanks der Druck im Kraftstofftank gesenkt werden.

Bevorzugt wird zum Beimischen des gasförmigen Erdgases ein Ventil verwendet, das die Saugleitung mit einer weiteren Saugleitung verbindet. Während die erste Saugleitung zum Ansaugen von flüssigem Erdgas in den Flüssigphasenbereich des Kraftstofftanks mündet, ist die weitere Saugleitung zum Ansaugen von gasförmigem Erdgas derart angeordnet, dass die Mündung im Gasphasenbereich des Kraftstofftanks zu liegen kommt. Über das Ventil, das vorzugsweise ganz oder teilweise geöffnet werden kann, kann dann die zur Absenkung des Vorförderdrucks erforderliche Menge an gasförmigem Erdgas beigemischt werden.

Das Ventil kann als einfaches Schaltventil ausgeführt sein, das in Abhängigkeit vom Vorförderdruck auf der Druckseite der Vorförderpumpe elektrisch oder elektromagnetisch angesteuert wird. Der Vorförderdruck wird hierzu bevorzugt mittels eines Drucksensors erfasst. Vorzugsweise übermittelt der Drucksensor die erfassten Messdaten an eine Steuereinheit, nach Maßgabe welcher das Schaltventil ganz oder teilweise geöffnet bzw. geschlossen wird.

In Weiterbildung der Erfindung wird vorgeschlagen, dass das Ventil über den Vorförderdruck auf der Druckseite der Vorförderpumpe gesteuert wird. Das Ventil wird hierzu mit dem Vorförderdruck auf der Druckseite der Vorförderpumpe beaufschlagt, so dass das Ventil druckabhängig (ganz oder teilweise) öffnet oder schließt. Das heißt, dass das Ventil über eine Steuerleitung mit der Druckseite der Vorförderpumpe verbunden ist. Die Steuerung über den Vorförderdruck ermöglicht eine schnelle Druckanpassung bei diskontinuierlichem Mengenbedarf. Ferner können eine separate Steuereinheit einschließlich der elektrischen Leitungen zur Verbindung der Steuereinheit mit dem Ventil entfallen, so dass die Anordnung des Ventils im Kraftstofftank vereinfacht wird.

Erfindungsgemäß wird eine Seitenkanalpumpe als Vorförderpumpe verwendet, da diese zur Förderung von Flüssigkeiten nahe dem Siedepunkt geeignet ist. Die Seitenkanalpumpe kann somit ebenfalls im Kraftstofftank angeordnet werden.

Das vorgeschlagene Verfahren kann auch gezielt dazu eingesetzt werden, den Druck im Kraftstofftank abzusenken. Hierzu wird vorzugsweise die Drehzahl der Vorförderpumpe erhöht, so dass der Förderstrom und damit der Vorförderdruck auf der Druckseite der Vorförderpumpe steigen. Das Ventil öffnet und über die weitere Saugleitung wird dem flüssigen Erdgas gasförmiges Erdgas aus dem Gasphasenbereich des Kraftstofftanks beigemischt. In der Folge sinkt der Tankdruck.

Zur Lösung der eingangs genannten Aufgabe wird ferner ein Kraftstoffversorgungssystem für eine mit Erdgas betreibbare Brennkraftmaschine vorgeschlagen, die einen Kraftstofftank zur Bevorratung von flüssigem Erdgas sowie eine Vorförderpumpe zur Versorgung einer Hochdruckpumpe mit flüssigem Erdgas aus dem Kraftstofftank umfasst, wobei das Kraftstoffversorgungssystem zur Durchführung des erfindungsgemäßen Verfahrens ausgebildet ist. Das flüssige Erdgas ist dabei über eine Saugleitung ansaugbar, die in einen Flüssigphasenbereich des Kraftstofftanks mündet. Erfindungsgemäß ist die Saugleitung über ein Ventil mit einer weiteren Saugleitung verbindbar, die in einen Gasphasenbereich des Kraftstofftanks mündet.

In Abhängigkeit von der Schaltstellung des Ventils kann demnach dem über die erste Saugleitung angesaugten flüssigen Erdgas gasförmiges Erdgas aus dem Gasphasenbereich des Kraftstofftanks beigemischt werden. Durch Beimischen von gasförmigem Erdgas kann der Vorförderdruck auf der Druckseite der Vorförderpumpe gezielt abgesenkt werden. Das heißt, dass über die veränderbare Gaszusammensetzung der Vorförderdruck regelbar ist. Auf diese Weise kann eine weitgehend verlustfreie Druckregelung erreicht werden, da kein Absteuern erforderlich ist. Ferner kann genau so viel flüssiges Erdgas angesaugt werden, wie tatsächlich benötigt wird. Als positiver Nebeneffekt stellt sich eine Druckabsenkung im Kraftstofftank ein. Darüber hinaus kann die Beimischung von Erdgas aus dem Gasphasenbereich auch gezielt zur Tankdruckabsenkung genutzt werden.

Gemäß der Erfindung ist das Ventil zum Beimischen von gasförmigem Erdgas im Kraftstofftank angeordnet. Auf diese Weise muss maximal eine Leitung nach außen geführt werden, was die Abdichtung vereinfacht. Vorzugsweise ist das Ventil ganz oder zumindest abschnittsweise im Flüssigphasenbereich des Kraftstofftanks angeordnet, und zwar möglichst nah an der ersten Saugleitung, die sich vorzugsweise in einem Bodenbereich des Kraftstofftanks befindet. Die weitere Saugleitung wird dann von dem Ventil in den Gasphasenbereich geführt, so dass die Mündung der weiteren Saugleitung oberhalb des Flüssigkeitsspiegels im Kraftstofftank zu liegen kommt.

Erfindungsgemäß ist auch die Vorförderpumpe im Kraftstofftank angeordnet. Auf diese Weise kann der konstruktive Aufwand weiter verringert werden. Des Weiteren erfindungsgemäß ist die im Kraftstofftank angeordnete Vorförderpumpe eine Seitenkanalpumpe, da diese zum Fördern von Flüssigkeiten nahe dem Siedepunkt besonders gut geeignet ist.

Das Ventil ist bevorzugt ein Schaltventil, das ganz oder teilweise öffnet und schließt.

Durch einen variablen Öffnungsquerschnitt kann eine genaue Mengenzumessung bewirkt werden, so dass über die dem flüssigen Erdgas beigemischte Menge an gasförmigem Erdgas eine präzise Regelung des Vorförderdrucks möglich ist.

Das Schaltventil kann als ein elektrisch oder elektromagnetisch ansteuerbares Ventil ausgebildet sein, das insbesondere nach Maßgabe einer Steuereinheit öffnet oder schließt. Die Steuereinheit kann mit einem Drucksensor verbunden sein, der den Vorförderdruck auf der Druckseite der Vorförderpumpe erfasst, so dass in Abhängigkeit vom Vorförderdruck das Ventil ganz oder teilweise geöffnet bzw. geschlossen wird. Alternativ wird vorgeschlagen, dass das Ventil vorförderdruckgesteuert ist. Das Ventil wird hierzu mit dem Vorförderdruck auf der Druckseite der Vorförderpumpe beaufschlagt, so dass das Ventil druckabhängig selbsttätig öffnet oder schließt. Eine Steuereinheit und/oder ein Drucksensor ist bzw. sind dann entbehrlich. Zudem können elektrische Steuerleitungen entfallen, welche das Ventil mit einer Steuereinheit verbinden. Das druckgesteuerte Ventil erlaubt eine schnelle Druckanpassung bei diskontinuierlichem Mengenbedarf.

Das erfindungsgemäße Verfahren und das erfindungsgemäße Kraftstoffversorgungssystem werden nachfolgend anhand der beigefügten Zeichnung näher erläutert. Diese zeigen:
Fig. 1 eine schematische Darstellung eines Kraftstoffversorgungssystems gemäß einer ersten bevorzugten Ausführungsform der Erfindung bei geschlossenem Ventil,
Fig. 2 das System der Fig. 1 bei geöffnetem Ventil,
Fig. 3 eine schematische Darstellung eines Kraftstoffversorgungssystems gemäß einer zweiten bevorzugten Ausführungsform der Erfindung bei geschlossenem Ventil und
Fig. 4 das System der Fig. 3 bei geöffnetem Ventil.

### Ausführliche Beschreibung der Zeichnungen

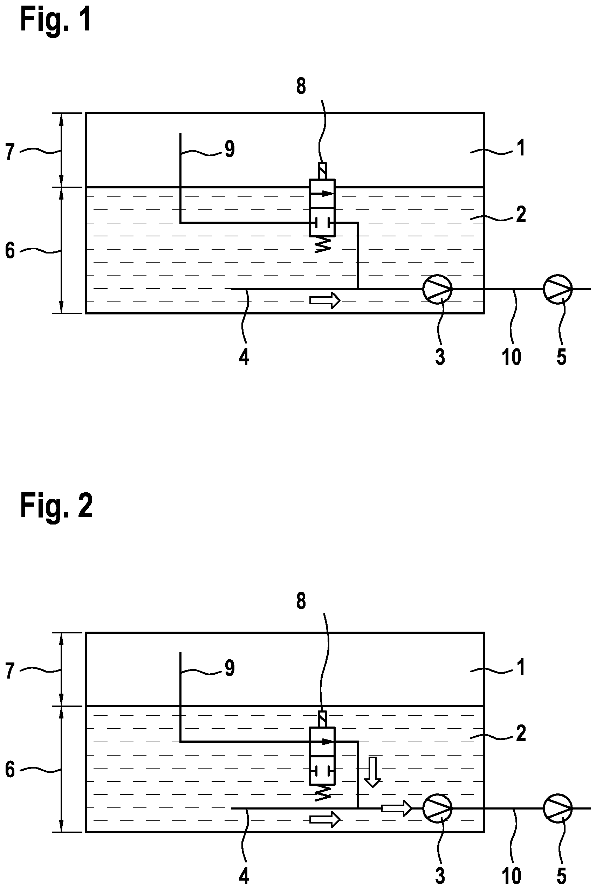

Das in der Fig. 1 schematisch dargestellte Kraftstoffversorgungssystem umfasst einen Kraftstofftank 1 zur Bevorratung von flüssigem Erdgas 2. Das im Kraftstofftank 1 bevorratete flüssige Erdgas 2 definiert einen Flüssigphasenbereich 6, oberhalb dessen es zur Ausbildung eines Gasphasenbereichs 7 kommt. Steigt der Druck im Kraftstofftank 1 über einen vorgegebenen Grenzwert an, kann durch Abführen von gasförmigem Erdgas aus dem Kraftstofftank 1 der Druck gesenkt werden.

Ferner umfasst das in der Fig. 1 dargestellte Kraftstoffversorgungssystem eine im Kraftstofftank 1 aufgenommene Vorförderpumpe 3, die der Versorgung einer außerhalb des Kraftstofftanks 1 angeordneten Hochdruckpumpe 5 mit flüssigem Erdgas 2 dient. Die Vorförderpumpe 3 ist hierzu über eine Förderleitung 10 mit der Hochdruckpumpe 5 verbunden, wobei die Förderleitung 10 aus dem Kraftstofftank 1 herausgeführt ist. Im Betrieb des Kraftstoffversorgungssystems wird mittels der Vorförderpumpe 3, die als Seitenkanalpumpe ausgeführt ist, flüssiges Erdgas 2 über eine Saugleitung 4 aus dem Flüssigphasenbereich 6 des Kraftstofftanks 1 angesaugt und über die Förderleitung 10 der Hochdruckpumpe 5 zugeführt. Steigt der Vorförderdruck auf der Druckseite der Vorförderpumpe 3 bzw. in der Förderleitung 10 über einen vorgegebenen Grenzwert an, kann die Saugleitung 4 über ein Ventil 8 mit einer weiteren Saugleitung 9 verbunden werden, die in den Gasphasenbereich 7 des Kraftstofftanks 1 mündet, so dass hierüber gasförmiges Erdgas ansaugbar ist (siehe Fig. 2). Das aus dem Gasphasenbereich 7 angesaugte gasförmige Erdgas wird dem flüssigen Erdgas 2 beigemischt, was zu einer Druckabsenkung im Kraftstofftank 1 sowie zu einer Druckabsenkung auf der Druckseite der Vorförderpumpe 3 führt. Über die Beimischung von gasförmigem Erdgas kann somit der Vorförderdruck geregelt werden.

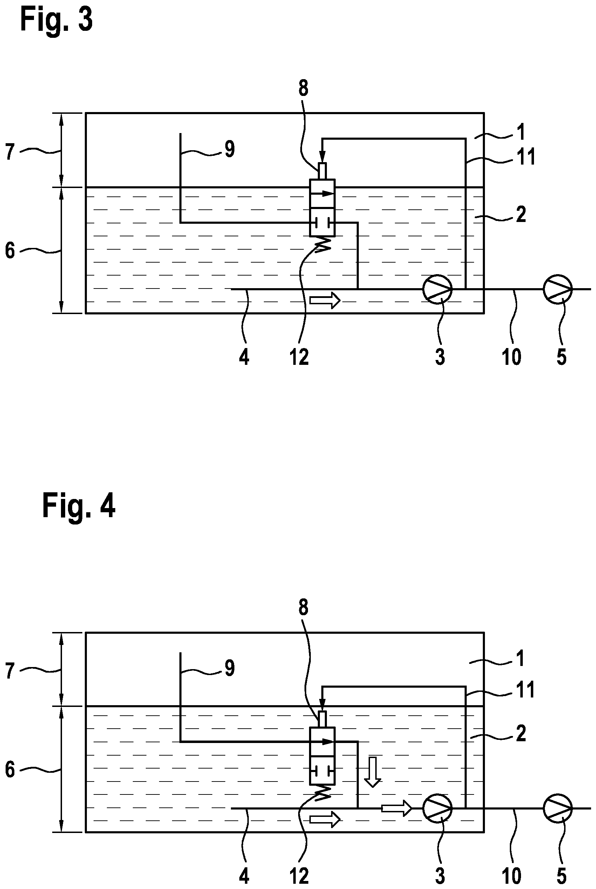

In der Fig. 3 ist eine Abwandlung des Kraftstoffversorgungssystems der Figuren 1 und 2 dargestellt. Hier ist das Ventil 8 als druckgesteuertes Ventil ausgeführt, das über den Vorförderdruck auf der Druckseite der Vorförderpumpe 3 gesteuert wird. Das Ventil 8 wird hierzu mit dem Vorförderdruck beaufschlagt, und zwar über eine Steuerleitung 11, die mit der Förderleitung 10 verbunden ist. Liegt der Druck in der Förderleitung 10 unter einem vorgegebenen Grenzwert, bleibt das Ventil 8 geschlossen, so dass nur flüssiges Erdgas 2 angesaugt wird (siehe Fig. 3). Steigt der Druck jedoch an, so dass er den vorgegebenen Grenzwert überschreitet, öffnet das Ventil 8 und dem flüssigen Erdgas 2 wird gasförmiges Erdgas aus dem Gasphasenbereich 7 beigemischt (siehe Fig. 4). Die Öffnungskraft des Ventils 8 kann dabei über die Federkraft einer Feder 12 eingestellt werden.

## Patentansprüche

1. Verfahren zum Betreiben einer Brennkraftmaschine mit Erdgas, bei dem flüssiges Erdgas (2) in einem Kraftstofftank (1) bevorratet und mittels einer Vorförderpumpe (3) über eine Saugleitung (4) aus einem Flüssigphasenbereich (6) des Kraftstofftanks (1) angesaugt und einer Hochdruckpumpe (5) zugeführt wird,
**dadurch gekennzeichnet, dass** zur Regelung des Vorförderdrucks auf der Druckseite der Vorförderpumpe (3) dem angesaugten flüssigen Erdgas (2) auf der Saugseite der Vorförderpumpe (3) gasförmiges Erdgas aus einem Gasphasenbereich (7) des Kraftstofftanks (1) beigemischt wird, wobei die Vorförderpumpe (3) als Seitenkanalpumpe ausgebildet ist.

2. Verfahren nach Anspruch 1,
wobei zum Beimischen des gasförmigen Erdgases ein Ventil (8) verwendet wird, das die Saugleitung (4) mit einer weiteren Saugleitung (9) verbindet und vorzugsweise über den Vorförderdruck auf der Druckseite der Vorförderpumpe (3) gesteuert wird.

3. Kraftstoffversorgungssystem für eine mit Erdgas betreibbare Brennkraftmaschine, welches zur Durchführung eines Verfahrens nach einem der Ansprüche 1 und 2 ausgebildet ist, umfassend einen Kraftstofftank (1) zur Bevorratung von flüssigem Erdgas (2) sowie eine Vorförderpumpe (3) zur Versorgung einer Hochdruckpumpe (5) mit flüssigem Erdgas (2) aus dem Kraftstofftank (1), wobei das flüssige Erdgas (2) über eine Saugleitung (4) ansaugbar ist, die in einen Flüssigphasenbereich (6) des Kraftstofftanks (1) mündet, und wobei die Saugleitung (4) über ein Ventil (8) mit einer weiteren Saugleitung (9) verbindbar ist, die in einen Gasphasenbereich (7) des Kraftstofftanks (1) mündet,
wobei das Ventil (8) und die Vorförderpumpe (3) im Kraftstofftank (1) angeordnet sind und die Vorförderpumpe (3) eine Seitenkanalpumpe ist.

4. Kraftstoffversorgungssystem nach Anspruch 3,
wobei das Ventil (8) ganz oder abschnittsweise im Flüssigphasenbereich (6) des Kraftstofftanks (1) angeordnet ist.

5. Kraftstoffversorgungssystem nach einem der Ansprüche 3 bis 4,
wobei das Ventil (8) ein Schaltventil ist, das ganz oder teilweise öffnet und schließt.

6. Kraftstoffversorgungssystem nach einem der Ansprüche 3 bis 5,
wobei das Ventil (8) vorförderdruckgesteuert ist.

## Claims

1. Method for operating an internal combustion engine using natural gas, in which liquefied natural gas (2) is stored in a fuel tank (1) and is sucked up out of a liquid phase region (6) of the fuel tank (1) by means of a pre-supply pump (3) via an intake line (4) and supplied to a high-pressure pump (5), **characterized in that**, in order to regulate the pre-supply pressure on the delivery side of the pre-supply pump (3), gaseous natural gas from a gas phase region (7) of the fuel tank (1) is added to the liquefied natural gas (2) sucked up on the intake side of the pre-supply pump (3), the pre-supply pump (3) being designed as a side-channel pump.

2. Method according to Claim 1, wherein, for the adding of the gaseous natural gas, use is made of a valve (8) which connects the intake line (4) to a further intake line (9) and is controlled preferably via the pre-supply pressure on the delivery side of the pre-supply pump (3).

3. Fuel supply system for an internal combustion engine which can be operated using natural gas, said fuel supply system being designed to carry out a method according to either of Claims 1 and 2, comprising a fuel tank (1) for storing liquefied natural gas (2), and a pre-supply pump (3) for supplying a high-pressure pump (5) with liquefied natural gas (2) from the fuel tank (1), wherein the liquefied natural gas (2) can be sucked up via an intake line (4) which opens into a liquid phase region (6) of the fuel tank (1), and wherein the intake line (4) is connectable via a valve (8) to a further intake line (9) which opens into a gas phase region (7) of the fuel tank (1), the valve (8) and the pre-supply pump (3) being arranged in the fuel tank (1) and the pre-supply pump (3) being a side-channel pump.

4. Fuel supply system according to Claim 3, wherein the valve (8) is entirely or partially arranged in the liquid phase region (6) of the fuel tank (1).

5. Fuel supply system according to either of Claims 3 and 4, wherein the valve (8) is a switching valve which entirely or partially opens and closes.

6. Fuel supply system according to one of Claims 3 to 5, wherein the valve (8) is controlled by the pre-supply pressure.

## Revendications

1. Procédé pour faire fonctionner un moteur à combustion interne avec du gaz naturel, dans lequel du gaz naturel liquide (2) est stocké dans un réservoir de carburant (1) et est aspiré au moyen d'une pompe de préalimentation (3) par l'intermédiaire d'une conduite d'aspiration (4) à partir d'une zone de phase liquide (6) du réservoir de carburant (1) et est amené à une pompe haute pression (5),
**caractérisé en ce que** pour la régulation de la pression de préalimentation côté pression de la pompe de préalimentation (3), du gaz naturel gazeux provenant d'une zone de phase gazeuse (7) du réservoir de carburant (1) est ajouté au gaz naturel liquide aspiré (2) côté aspiration de la pompe de préalimentation (3), la pompe de préalimentation (3) étant réalisée sous la forme d'une pompe régénérative.

2. Procédé selon la revendication 1, dans lequel, pour ajouter le gaz naturel gazeux, on utilise une soupape (8) qui relie la conduite d'aspiration (4) à une conduite d'aspiration supplémentaire (9) et est commandée de préférence par la pression de préalimentation côté pression de la pompe de préalimentation (3).

3. Système d'approvisionnement en carburant pour un moteur à combustion interne pouvant fonctionner avec du gaz naturel, qui est réalisé pour exécuter un procédé selon l'une quelconque des revendications 1 et 2, comprenant un réservoir de carburant (1) destiné à stocker du gaz naturel liquide (2) ainsi qu'une pompe de préalimentation (3) destinée à alimenter une pompe haute pression (5) en gaz naturel liquide (2) à partir du réservoir de carburant (1), le gaz naturel liquide (2) pouvant être aspiré par une conduite d'aspiration (4) qui débouche sur une zone de phase liquide (6) du réservoir de carburant (1), et la conduite d'aspiration (4) pouvant être reliée par une soupape (8) à une conduite d'aspiration supplémentaire (9) qui débouche sur une zone de phase gazeuse (7) du réservoir de carburant (1),
la soupape (8) et la pompe de préalimentation (3) étant disposées dans le réservoir de carburant (1), et la pompe de préalimentation (3) étant une pompe régénérative.

4. Système d'approvisionnement en carburant selon la revendication 3, dans lequel la soupape (8) est disposée entièrement ou par endroits dans la zone de phase liquide (6) du réservoir de carburant (1).

5. Système d'approvisionnement en carburant selon l'une quelconque des revendications 3 à 4, dans lequel la soupape (8) est une soupape de commutation qui s'ouvre et se ferme entièrement ou partiellement.

6. Système d'approvisionnement en carburant selon l'une quelconque des revendications 3 à 5, dans lequel la soupape (8) est commandée par la pression de préalimentation.
